(19)

Europäisches
Patentamt
European
Patent Office
Office européen
des brevets

(11)  **EP 4 293 582 A1**

(12)  **EUROPEAN PATENT APPLICATION**

(43) Date of publication:
**20.12.2023 Bulletin 2023/51**

(21) Application number: **22305863.7**

(22) Date of filing: **14.06.2022**

(51) International Patent Classification (IPC):
**G06N 10/20** $^{(2022.01)}$     **G06N 10/80** $^{(2022.01)}$

(52) Cooperative Patent Classification (CPC):
**G06N 10/20; G06N 10/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BULL SAS**
**78340 Les Clayes-sous-Bois (FR)**

(72) Inventor: **MARTIEL, Simon**
**78000 VERSAILLES (FR)**

(74) Representative: **Plasseraud IP**
**66, rue de la Chaussée d'Antin**
**75440 Paris Cedex 09 (FR)**

(54)   **METHOD FOR CALCULATING AN OBSERVABLE USING A NON-QUANTUM COMPUTER**

(57)   A method for calculating, using a non-quantum computer (1), a value ($<0|U^\dagger HU|0>$) of an observable (H) sampled out of a quantum state is over-optimized for reducing memory size and calculation time. It may be useful for emulating a quantum circuit that produces the quantum state. The method uses implementations of Pauli rotations and Pauli operators that are simple and cheap, based on coordinate-switching operations.

FIG. 2

**Description**

-- **TECHNICAL FIELD OF THE INVENTION** --

The invention relates to calculating an observable sampled out of a quantum state by using a non-quantum computer instead of a quantum computer.

-- **BACKGROUND OF THE INVENTION** --

At present time, existing quantum computers are limited to handling a very low number of qubits, typically less than twenty-five qubits, and their operation is limited by short decoherence time and instruction faults. In this context, comparing algorithms to be implemented on future quantum computers needs developing new tools that can be implemented using non-quantum computers as available now, also called classical computers. Issues are to test, debug and analyse execution of an algorithm as it will be executed by a quantum computer. To this end, quantum computer operation is emulated using a classical computer. Then, for handling by the classical computer, a n-qubit vector is represented as a $2^n$-length vector, also denoted $2^n$-vector, which is comprised of $2^n$ complex coordinates where n is a non-zero integer.

Known methods for emulating the operation of the quantum computer consist in having the classical computer calculating matrix and vector products as linear combinations of their complex coefficients and coordinates. But for such methods, increasing n-value by one multiplies by a factor of about two the size of the memory that is required for the classical computer, and also the computation time. Put another way, required memory and calculation time increase exponentially with the number n of the qubits in the quantum states.

Starting from this situation, one object of the present invention consists in providing a new method of simulating the operation of a quantum computer using a classical computer, which is less demanding in memory size and calculation time.

-- **SUMMARY OF THE INVENTION** --

For meeting this object or others, a first aspect of the present invention proposes a method for calculating, using a non-quantum computer, a value $<0|U^{\dagger}HU|0>$ of an observable H sampled out of a quantum state $U|0>$, when this quantum state $U|0>$ results from a unitary operator U that corresponds to a quantum circuit and operates with an initial quantum state $|0>$. Executing the invention method with the non-quantum computer thus emulates the operation of the quantum circuit which corresponds to the unitary operator U, for calculating the observable H. This invention method comprises the following steps:

/1/ expressing the unitary operator U as an ordered decomposition product of at least one Pauli rotation $R_{P_j}(\theta_j)$, multiplied by the identity operator $I_{2^n}$ or by a Clifford operator C different from this identity operator $I_{2^n}$, each Pauli rotation equalling a sum of the identity operator I multiplied by cosine of half of a rotation angle $\theta_j$ of this Pauli rotation and a first Pauli operator $P_j$ multiplied by sine of the half of the rotation angle $\theta_j$ and by the opposite of the imaginary unit;

/2/ expressing the observable H as a linear combination of second Pauli operators $P_{j'}$, or if step /1/ involves the Clifford operator C that is different from the identity operator $I_{2^n}$: base-transforming the observable H using the Clifford operator C and expressing the base-transformed observable, namely $C^{\dagger}HC$, as a linear combination of second Pauli operators;

/3/ expressing each first Pauli operator $P_j$ as a first sum of transfer operators that each select one coordinate of a quantum state expressed in a calculation base and transfer the selected coordinate onto a selected base state, the selected coordinates and the selected base states, and also respective phases of the transfer operators in the first sum being determined separately for each first Pauli operator $P_j$;

/4/ calculating a final state $|\psi_{final}>$ by applying each Pauli rotation $R_{P_j}(\theta_j)$ as expressed in step /3/, in a chained manner from the initial quantum state $|0>$ according to the ordered decomposition product of the unitary operator U obtained in step /1/;

/5/ expressing each second Pauli operator $P_{j'}$ as a second sum of transfer operators that each select one coordinate of a quantum state expressed in the calculation base and transfer the selected coordinate onto a selected base state, the selected coordinates and the selected base states, and also respective phases of the transfer operators in the second sum being determined separately for each second Pauli operator $P_{j'}$;

/6/ for each second Pauli operator $P_{j'}$ and using the second sum obtained in step /5/ for this second Pauli operator $P_{j'}$, calculating a contribution value $<\psi_{final}|P_{j'}|\psi_{final}>$ as a result of right- and left-combination of the second Pauli operator $P_{j'}$ with the final state $|\psi_{final}>$ calculated in step /4/; and

/7/ inputting the contribution values $<\psi_{final}|P_{j'}|\psi_{final}>$ calculated in step /6/ into the linear combination obtained in step /2/ for the observable H or base-transformed observable $C^{\dagger}HC$, so as to obtain as a calculation result the value $<0|U^{\dagger}HU|0>$ of the observable H sampled out of the quantum state $U|0>$.

Thanks to expressing each Pauli rotation using a Pauli operator, and then expressing each Pauli operator that is used in an elementary form, the invention method is over-optimized for reducing the necessary calculation resource and calculation time. In particular, steps /3/ and /5/ transform each Pauli operator into a sum of coordinate-switching operations, corresponding to the so-called transfer operators, which can be executed in a very simple and cheap manner by the non-quantum computer.

In preferred implementations of the invention, for each first Pauli operator $P_j$ or second Pauli operator $P_{j'}$ involved in steps /3/ and /5/, the transfer operators and their respective phases in the first or second sum may be obtained from a x-vector and a z-vector both of length n and determined for this first Pauli operator $P_j$ or second Pauli operator $P_{j'}$, where n is the qubit number of the quantum state and an integer index q is numbering the qubits of the quantum state according to the calculation base. The x-vector and z-vector are determined in the following way:

- the $q^{th}$ coordinate of the x-vector equals unity if the first or second Pauli operator acts as the X-Pauli 2x2 operator or Y-Pauli 2x2 operator onto the $q^{th}$ qubit of any quantum state expressed in the calculation base, otherwise the $q^{th}$ coordinate of the x-vector equals zero, and

- the $q^{th}$ coordinate of the z-vector equals unity if the first or second Pauli operator acts as the Z-Pauli 2x2 operator or Y-Pauli 2x2 operator onto the $q^{th}$ qubit of any quantum state expressed in the calculation base, otherwise the $q^{th}$ coordinate of the z-vector equals zero.

Generally for the invention, the observable H may be useful in a variational algorithm, thus encompassing a broad spectrum of applications. For such applications, the invention provides a reduction in the simulation time.

Generally again, the observable H may be useful in applications pertaining to quantum chemistry, combinatorial optimization and machine learning.

For example, the invention method may be implemented for executing algorithms such as Variation Quantum Eigensolver in quantum chemistry. It may be implemented in particular for estimating the ground energy of complex physical or chemical systems or materials, such as molecules, and thus lead to chemical and electromagnetic behaviours of these systems. Indeed, algorithms used for such physical or chemical applications often rely on execution of a sequence of Pauli rotations combined with sampling of an observable which is specified in the Pauli basis. The observable is then the Hamiltonian of the physical or chemical system considered. Such applications include designing molecules that are efficient as medicines, dyeing agents, liquid crystals, etc.

The most generic approach in combinatorial optimization, in particular for hard optimization problems, is that of Quantum Approximate Optimisation Algorithms, known as QAOA. It is also based on Pauli rotations followed by sampling of a Pauli-sparse Hamiltonian. The QAOA algorithms can thus be emulated efficiently using the invention method.

Finally, the invention method may be implemented to simulate simple noise models, in particular for noise as existing when executing a quantum program on an imperfect hardware. Indeed, depolarizing noise may be simulated by applying Pauli rotations.

In addition, a second aspect of the invention proposes a computer program product that comprises instructions for executing the method of the first invention aspect when this computer program product is implemented by a non-quantum computer.

These and other features of the invention will be now described with reference to the appended figures, which relate to preferred but not-limiting implementations of the invention.

-- **BRIEF DESCRIPTION OF THE DRAWINGS** --

Figure 1 shows a classical computer implementing the invention method;

Figure 2 is a block diagram that shows steps of an implementation of the invention method;

Figure 3 displays a possible first algorithm that may be useful for executing the invention method, when applying a Pauli rotation to a quantum state;

Figure 4 displays a possible second algorithm that may also be useful for executing the invention method, when sampling a Pauli operator out of a quantum state;

Figure 5a is a diagram that compares calculation times between the invention method and a prior-art method, as a function of a qubit number; and

Figure 5b is another diagram that compares calculation times between the invention method and the prior-art method of Figure 5a, as a function of a number of involved Pauli rotations.

## -- DETAILED DESCRIPTION OF THE INVENTION --

In the present description, classical computer denotes a non-quantum computer, as opposed to an actual quantum computer.

The object of the invention is calculating the value $<0|U^\dagger HU|0>$ by using a classical computer for emulating the operation of a quantum computer that would be used for calculating the same value $<0|U^\dagger HU|0>$. The following notations are used throughout hereafter:

$|0>$ : initial quantum state to be used for the invention, which may be one of the quantum base states used for calculation or any other quantum state which is preferably a stabilizer state;

$n$ : number of qubits combined through tensor product in each quantum state considered herein. Therefore, each quantum state is described classically by an ordered series of $2^n$ complex coordinates and called n-qubit;

$H$ : observable, defined as a $2^n \times 2^n$ operator, for example a Hamiltonian in an application of the invention to quantum chemistry;

$U$ : unitary operator to be applied to the initial quantum state $|0>$ before assessing the value of the observable H. The value to be calculated is therefore $<0|U^\dagger HU|0>$, where $U^\dagger$ denotes the complex conjugate transposition of the operator U. The unitary operator U corresponds to a quantum circuit to be emulated using the classical computer;

$C$ : any Clifford operator involved when expressing the unitary operator U as a product of Pauli rotations. It is assumed that the Clifford group in well-known, composed of so-called Clifford operators. In the particular case of a Clifford operator C, $C^\dagger$ is equal to the reverse operator of C, so that $C^\dagger HC$ is equivalent to converting the observable H through a base transformation;

$P$ : any Pauli operator acting onto quantum states comprised on n qubits combined through tensor product. In a known manner, each Pauli operator P acts as the identity 2x2 operator $I_2$ or as any of the X-, Y- and Z-Pauli 2x2 operators for the $q^{th}$ qubit of any n-qubit, q being an integer index comprised between 1 and n, values 1 and n included;

$R_P(\theta)$ : the Pauli rotation acting onto quantum states comprised on n qubits combined through tensor product, and having the Pauli operator P as an axis and rotation angle $\theta$;

$\mathbb{I}$ or $I_{2^n}$ : identity operator sized for n qubits combined through tensor product, $I_2$ then denoting the identity 2x2 operator;

$|\psi>$ : any quantum state comprised of n qubits combined through tensor product, and thus expressed as an ordered series of $2^n$ complex coordinates in the calculation base;

$|k>$ : base state comprised of n base qubits combined through tensor product; and

$i$ : the imaginary unit of complex numbers.

In a well-known manner, any Pauli rotation $R_P(\theta)$ can be written in the following manner (Eq. 1):

$$R_P(\theta) = \cos(\theta/2)\mathbb{I} - i\sin(\theta/2)P$$

The minus sign before the imaginary unit i in this equation Eq. 1 is provided by convention and may be converted into plus sign if opposite convention is used.

Again in a well-known manner, any Pauli operator P can be written in the following manner (Eq. 2):

$$P = i^{-v_z \cdot v_x} Z^{v_z} X^{v_x}$$

where X denotes the X-Pauli 2x2 operator, Z denotes the Z-Pauli 2x2 operator, $v_x$ and $v_z$ are n-length vectors that depend on the Pauli operator P, and that are constructed in the following manner:

for vector $v_z$, also called z-vector in the general part of the present description: the $q^{th}$ coordinate of vector $v_z$ equals unity if the Pauli operator P acts as the Z-Pauli 2x2 operator or Y-Pauli 2x2 operator onto the $q^{th}$ qubit of any quantum state $|\psi\rangle$ expressed in the calculation base, otherwise the $q^{th}$ coordinate of $v_z$ equals zero corresponding to the Pauli operator P acting as $I_2$ onto the $q^{th}$ qubit; and

for vector $v_x$, also called x-vector in the general part of the present description: the $q^{th}$ coordinate of vector $v_x$ equals unity if the Pauli operator P acts as the X-Pauli 2x2 operator or Y-Pauli 2x2 operator onto the $q^{th}$ qubit of any quantum state $|\psi\rangle$ expressed in the calculation base, otherwise the $q^{th}$ coordinate of $v_x$ equals zero corresponding to the Pauli operator P acting as $I_2$ onto the $q^{th}$ qubit.

In the above equation Eq. 2, $Z^{v_z}$ denotes the operator acting on the quantum state $|\psi\rangle$ that is obtained by tensor product of the Z-Pauli 2x2 and $I_2$ operators, with using the Z-Pauli 2x2 for the $q^{th}$ qubit if the $q^{th}$ coordinate of vector $v_z$ equals one, otherwise using the $I_2$ operator for the $q^{th}$ qubit. Similarly, $X^{v_x}$ denotes the operator acting on the quantum state $|\psi\rangle$ that is obtained by tensor product of the X-Pauli 2x2 and $I_2$ operators, with using the X-Pauli 2x2 for the $q^{th}$ qubit if the $q^{th}$ coordinate of vector $v_x$ equals one, otherwise using the $I_2$ operator for the $q^{th}$ qubit. The phase factor $i^{-v_z \cdot v_x}$ comes from the identity Y = -iZX, and $v_z \cdot v_x$ denotes the dot product of both vectors $v_z$ and $v_x$.

Then, one can show that the expression of Pauli operator P can be transformed from the equation Eq. 2 into the following equation (Eq. 3):

$$P = i^{-v_z \cdot v_x} \sum_{k \in \{0,1\}^n} (-1)^{k \cdot v_z} |k\rangle\langle k \oplus v_x|$$

In equation Eq. 3, k denotes the n-length vector that is comprised of bit values as coordinates each equal to the corresponding qubit figure in $|k\rangle$ expressed in the tensor-product calculation base, $\oplus$ is the well-known XOR operator acting on bits, and $k \cdot v_z$ denotes the dot product of both vectors k and $v_z$.

Intermediate development lines for obtaining equation Eq. 3 from equation Eq. 2 are:

$$X^{v_x} = \sum_{k \in \{0,1\}^n} |k\rangle\langle k \oplus v_x|$$

$$X^{v_x} |l \oplus v_x\rangle = |l\rangle$$

$$Z^{v_z} |k\rangle = (-1)^{v_z \cdot k} |k\rangle$$

$$Z^{v_z} = \sum_{k \in \{0,1\}^n} (-1)^{v_z \cdot k} |k\rangle\langle k|$$

$$Z^{v_z} X^{v_x} = \left( \sum_{k' \in \{0,1\}^n} (-1)^{v_z \cdot k'} |k'\rangle\langle k'| \right) \left( \sum_{k \in \{0,1\}^n} |k\rangle\langle k \oplus v_x| \right)$$

$$= \sum_{k' \in \{0,1\}^n} \sum_{k \in \{0,1\}^n} (-1)^{v_z \cdot k'} |k'\rangle\langle k'|k\rangle\langle k \oplus v_x|$$

$$= \sum_{k \in \{0,1\}^n} (-1)^{v_z \cdot k} |k\rangle\langle k \oplus v_x|$$

When applied to the quantum state $|\psi\rangle$, equation Eq. 3 becomes (Eq. 3'):

$$P|\psi\rangle = i^{-v_z \cdot v_x} \sum_{k \in \{0,1\}^n} (-1)^{k \cdot v_z} |k\rangle (\langle k \oplus v_x|\psi\rangle)$$

The Pauli-transformed state $P|\psi\rangle$ can be calculated in this way by implementing a number of complex operations that is proportional to $2^n$. $|k\rangle\langle k \oplus v_x|$ has been called transfer operator in the general part of this description. It selects one coordinate of the quantum state $|\psi\rangle$ and transfers it onto the base state $|k\rangle$.

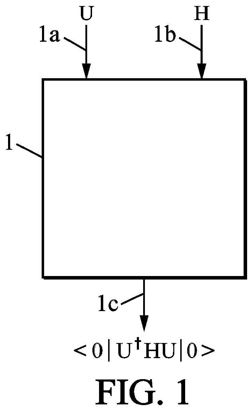

In Figure 1, reference number 1 denotes a classical computer used for implementing the invention method. References 1a and 1b denote inputs thereof for entering the unitary operator U and the observable H, respectively, and reference 1c denotes the output that delivers the value $\langle 0|U^\dagger H U|0\rangle$.

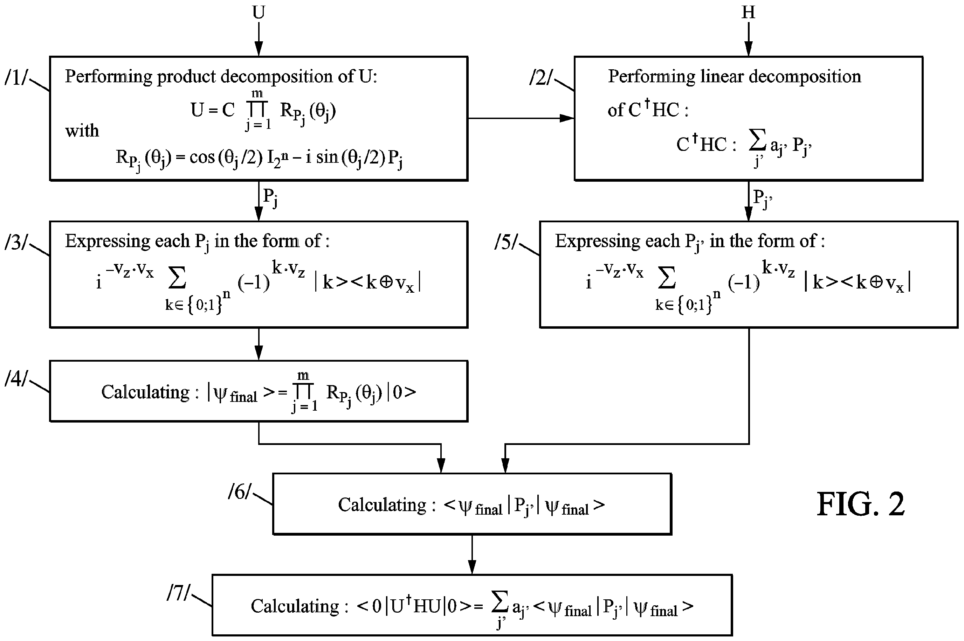

Referring now to Figure 2, the invention method starts with step /1/ that consists in performing a product-decomposition of the unitary operator U using Pauli rotations. This product-decomposition involves an ordered series of Pauli rotations ($R_{P_j}(\theta_j)$), each having the Pauli operator $P_j$ as its axis and rotation angle $\theta_j$. The angles $\theta_j$ are non-Clifford, i.e. each $\theta_j$ is not a multiple of $\pi/2$. Thus, the unitary operator U is expressed as set in the following equation (Eq. 4):

$$U = C R_{P_m}(\theta_m) \cdots R_{P_1}(\theta_1)$$

In equation Eq. 4, C is a Clifford operator which depends on the unitary operator U. In particular, the Clifford operator C may be $\mathbb{I}$, but may also be any other Clifford operator. As it is well-known, identity operator $I_{2^n}$ is a particular Clifford operator. The product of the Pauli rotations does not commutate although it is written in contracted form within box /1/ in Figure 2. In addition, each one of the Pauli rotations $R_{P_j}(\theta_j)$ can be expressed in accordance with above equation Eq. 1, using each time Pauli operator $P_j$ and rotation angle $\theta_j$ as P and $\theta$, respectively. The Pauli operators $P_j$ have been called first Pauli operators in the general part of the present description. The calculation time that is necessary for obtaining the decomposition product of the unitary operator U as displayed in the above equation Eq. 4 is proportional to $n^2 m$, where m is the number of Pauli rotations in the decomposition product and n is again the number of qubits that are combined through tensor product.

Step /2/ consists in performing a linear decomposition of the observable $C^\dagger H C$ using Pauli operators, with the Clifford operator C as determined in step /1/. When the Clifford operator C is different from $\mathbb{I}$, $C^\dagger H C$ has been called base-transformed observable. In this way, the observable or base-transformed observable is expressed as a linear combination of Pauli operators $P_{j'}$ in accordance with the following equation (Eq. 5):

$$H \text{ or } C^\dagger H C = \Sigma_{j'} \, a_{j'} P_{j'}$$

where $a_{j'}$ are complex coefficients of the linear combination. The Pauli operators $P_{j'}$ have been called second Pauli operators in the general part of the present description.

Step /3/ consists in applying the above equation Eq. 3 to each one of the first Pauli operators $P_j$. The sums that appear in this equation Eq. 3 when applied to the first Pauli operators $P_j$ have been called first sums in the general part of the present description.

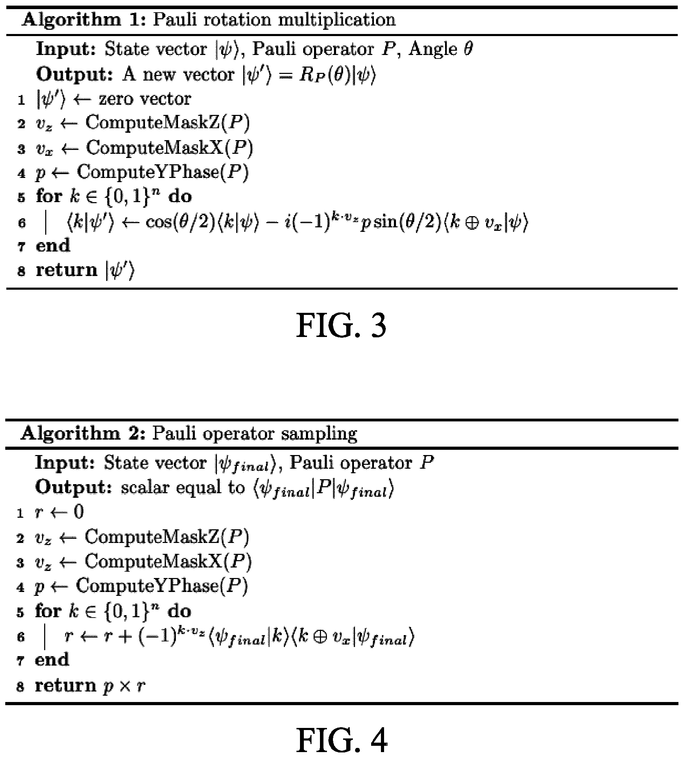

Then, the expression of each first Pauli operator $P_j$ as resulting from step /3/ can be inserted in the above equation Eq. 1. The so-obtained expression for each Pauli rotation $R_{Pj}(\theta_j)$ is then used for applying this latter to any quantum state $|\psi>$. This may be achieved by implementing Algorithm 1 as displayed in Figure 3 in the form of a pseudo-code. The inputs of Algorithm 1 are thus the quantum state $|\psi>$ expressed by its $2^n$ complex coordinates, and the Pauli rotation $R_P(\theta)$ determined by its axis P and its rotation angle $\theta$. The rotated quantum state $R_P(\theta)|\psi>$ is then the output $|\psi'>$ of Algorithm 1 also expressed by its $2^n$ complex coordinates $<k|\psi>$. The successive lines of the pseudo-code of Algorithm 1 as displayed in Figure 3 have the following meanings:

line 1: initializing of the output quantum state $|\psi'>$

line 2: determination of the n-length vector $v_z$ by implementing a subroutine to the Pauli operator P, for determining its components that equal Z- or Y-Pauli 2x2 operator. Such ComputeMaskZ subroutine is well-known and basic to implement

line 3: determination of the n-length vector $v_x$ by implementing another subroutine to the Pauli operator P, for determining its components that equal X- or Y-Pauli 2x2 operator. Such ComputeMaskX subroutine is also well-known and basic to implement

line 4: calculation of the phase factor p equalling to the phase factor $i^{-v_z \cdot v_x}$ as appearing in the above equation Eq. 2. This is achieved by implementing a third subroutine ComputeYPhase that uses in a basic manner the results of both subroutines ComputeMaskZ and ComputeMaskX applied to the Pauli operator P

lines 5 to 7: iteration loop for calculating each coordinate of the rotated quantum state $R_P(\theta)|\psi> = |\psi'>$, by using the combined equations Eq. 1 and Eq. 3'.

Algorithm 1 is simple and does not require any synchronisation between sub-results being made available.

In step /4/, Algorithm 1 is implemented repetitively in a chained manner so as to calculate the result of the product $R_{P_m}(\theta_m)... R_{P_2}(\theta_2)R_{P_1}(\theta_1)$ as appearing in equation Eq. 4, when applied to the initial quantum state $|0>$: it is first applied with $P=P_1$, $\theta=\theta_1$ and $|\psi>=|0>$ for obtaining $R_{P_1}(\theta_1)|0>$, then applied with $P=P_2$, $\theta=\theta_2$ and $|\psi>=R_{P_1}(\theta_1)|0>$ for obtaining $R_{P_2}(\theta_2)R_{P_1}(\theta_1)|0>$, and then with $P=P_3$, $\theta=\theta_3$ and $|\psi>=R_{P_2}(\theta_2)R_{P_1}(\theta_1)|0>$ for obtaining $R_{P_3}(\theta_3)R_{P_2}(\theta_2)R_{P_1}(\theta_1)|0>$, etc until $R_{P_m}(\theta_m)...R_{P_2}(\theta_2)R_{P_1}(\theta_1)|0>$ is obtained. The resulting quantum state has been called final state and denoted $|\psi_{final}>$.

Step /5/ consists in applying the above equation Eq. 3 to each one of the second Pauli operators $P_{j'}$. The sums that appear in this equation Eq. 3 when applied to the second Pauli operators $P_{j'}$ have been called second sums in the general part of the present description.

Step /6/ consists in calculating a contribution value for the result of $<0|U^{\dagger}HU|0>$, that originates from each second Pauli operator $P_{j'}$ as involved in the above equation Eq. 5. This contribution value is $<\psi_{final}|P_{j'}|\psi_{final}>$, and the expression obtained in step /5/ for the Pauli operator $P_{j'}$ is used to this end. This corresponds to applying the following equation (Eq. 6) to the Pauli operator $P_{j'}$:

$$\langle\psi_{final}|P|\psi_{final}\rangle = i^{-v_z \cdot v_x} \sum_{k \in \{0,1\}^n} (-1)^{k \cdot v_z}\langle\psi_{final}|k\rangle\langle k \oplus v_x|\psi_{final}\rangle$$

in which the meanings already explained apply again. The contribution value $<\psi_{final}|P_{j'}|\psi_{final}>$ can be calculated in this way with a computation time that is proportional to $2^n$.

This calculation may be achieved by implementing Algorithm 2 as displayed in Figure 4 in the form of another pseudo-code. The inputs of Algorithm 2 are thus the final state $|\psi_{final}>$ expressed by its $2^n$ complex coordinates as resulting from step /4/, and the Pauli operator P successively equals all second Pauli operators $P_{j'}$. For each execution, the output of Algorithm 2 is the contribution value $<\psi_{final}|P_{j'}|\psi_{final}>$. The successive lines of the pseudo-code of Algorithm 2 as displayed in Figure 4 have the following meanings:

line 1: initializing of an addition result r lines 2 to 4: determination of the n-length vectors $v_z$ and $v_x$ and also the phase factor p in a manner similar to that used in Algorithm 1, by applying the subroutines ComputeMaskZ, ComputeMaskX and ComputeYPhase to the Pauli operator $P_{j'}$

lines 5 to 7: iteration loop for calculating after one another each term of the sum that appears in the above equation Eq. 6. Once calculated, each term is added to the previous value of the addition result r

line 8: multiplication by the phase factor p so as to obtain the contribution value $<\psi_{final}|P_{j'}|\psi_{final}>$.

Algorithm 2 is simple again and does not require either any synchronisation between sub-results.

Algorithm 2 is applied to each second Pauli operator $P_{j'}$ that is involved in the above equation Eq. 5.

Finally, step /7/ consists in combining the contribution values as resulting from step /6/ in accordance with the above equation Eq. 5. The combination result is the desired value of $<0|U^\dagger HU|0>$.

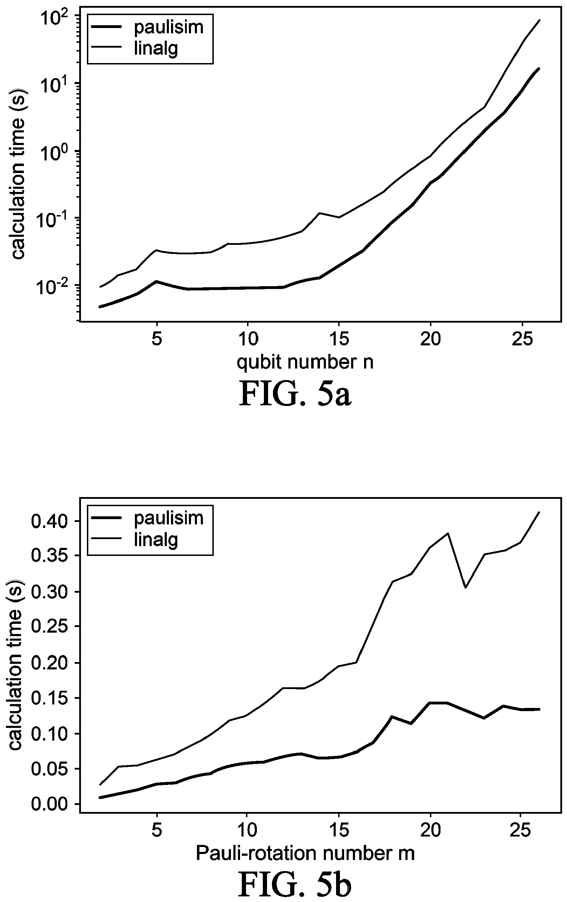

The diagram of Figure 5a displays the calculation times necessary for obtaining the value of $<0|U^\dagger HU|0>$ for a unitary operator U which involves fifty Pauli rotations in its decomposition product, when using a classical computer which includes twenty threads. Vertical axis indicates the calculation time values expressed in seconds (s), in logarithmic scale. Horizontal axis indicates the values of the qubit number n. Both curves correspond to the following calculations:

curve labelled "linalg": the calculation is carried out using standard matrix and vector products as implemented before the present invention; and

curve labelled "paulisim": the calculation is carried out using the present invention, including implementations of Algorithm 1 and Algorithm 2.

All other calculation conditions and parameters are identical between both curves. It is clear that the invention provides significant reduction in the calculation time.

The diagram of Figure 5b corresponds again to implementing standard matrix and vector products (curve labelled "linalg") and implementing the present invention including Algorithm 1 and Algorithm 2 (curve labelled "paulisim"), but with fixed qubit number n equal to twenty and varying Pauli rotation number m as appearing in the decomposition product of the unitary operator U. All other calculation conditions and parameters are identical again between both curves. Vertical axis indicates again the calculation time values expressed in seconds (s), but in linear scale. Horizontal axis indicates the values of the Pauli rotation number m. Reduction in the calculation time is also clear in this way.

**Claims**

1.  A method for calculating, using a non-quantum computer, a value ($<0|U^\dagger HU|0>$) of an observable (H) sampled out of a quantum state (U|0>), said quantum state resulting from a unitary operator (U) corresponding to a quantum circuit and operating with an initial quantum state (|0>), said method comprising the following steps:

    /1/ expressing the unitary operator (U) as an ordered decomposition product of at least one Pauli rotation ($R_{P_j}(\theta_j)$), multiplied by an identity operator ($I_{2_n}$) or by a Clifford operator (C) different from said identity operator, each Pauli rotation equalling a sum of the identity operator multiplied by cosine of half of a rotation angle ($\theta_j$) of said Pauli rotation and a first Pauli operator ($P_j$) multiplied by sine of the half of said rotation angle and by opposite of imaginary unit;

    /2/ expressing the observable (H) as a linear combination of second Pauli operators ($P_{j'}$), or if step /1/ involves a Clifford operator (C) that is different from the identity operator ($I_{2_n}$): base-transforming the observable (H) using the Clifford operator and expressing the base-transformed observable ($C^\dagger HC$) as a linear combination of second Pauli operators;

    /3/ expressing each first Pauli operator (Pj) as a first sum of transfer operators that each select one coordinate of a quantum state expressed in a calculation base and transfer the selected coordinate onto a selected base state, the selected coordinates and the selected base states, and also respective phases of the transfer operators in said first sum being determined separately for said first Pauli operator;

    /4/ calculating a final state ($|\psi_{final}>$) by applying each Pauli rotation ($R_{P_j}(\theta_j)$) as expressed in step /3/, in a chained manner from the initial quantum state (|0>) according to the ordered decomposition product of the unitary operator (U) obtained in step /1/;

    /5/ expressing each second Pauli operator ($P_{j'}$) as a second sum of transfer operators that each select one coordinate of a quantum state expressed in the calculation base and transfer the selected coordinate onto a selected base state, the selected coordinates and the selected base states, and also respective phases of the transfer operators in said second sum being determined separately for said second Pauli operator;

    /6/ for each second Pauli operator ($P_{j'}$) and using the second sum obtained in step /5/ for said second Pauli operator, calculating a contribution value ($<\psi_{final}|P_{j'}|\psi_{final}>$) as a result of right- and left-combination of said second Pauli operator with the final state ($|\psi_{final}\rangle$) calculated in step /4/; and

/7/ inputting the contribution values ($\langle\psi_{final}|P_{j'}|\psi_{final}\rangle$) calculated in step /6/ into the linear combination obtained in step /2/ for the observable (H) or base-transformed observable ($C^\dagger HC$), so as to obtain as a calculation result the value ($\langle 0|U^\dagger HU|0\rangle$) of the observable (H) sampled out of the quantum state ($U|0\rangle$).

2. The method of claim 1 wherein, for each first ($P_j$) or second ($P_{j'}$) Pauli operator involved in steps /3/ and /5/, the transfer operators and the respective phases of said transfer operators in the first or second sum are obtained from a x-vector and a z-vector both of length n and determined for said first or second Pauli operator, where n is a qubit number of the quantum state and an integer index q is numbering the qubits of the quantum state according to the calculation base, and wherein

a $q^{th}$ coordinate of the x-vector equals unity if said first or second Pauli operator acts as X-Pauli 2x2 operator or Y-Pauli 2x2 operator onto the $q^{th}$ qubit of any quantum state expressed in the calculation base, otherwise equals zero, and

a $q^{th}$ coordinate of the z-vector equals unity if said first or second Pauli operator acts as Z-Pauli 2x2 operator or Y-Pauli 2x2 operator onto the $q^{th}$ qubit of any quantum state expressed in the calculation base, otherwise equals zero.

3. The method of claim 1 or 2, wherein the observable (H) is useful in a variational algorithm.

4. The method of any one of claims 1 to 3, wherein the observable (H) is useful in applications pertaining to quantum chemistry, combinatorial optimization and machine learning.

5. A computer program product, comprising instructions for executing the method of any one of claims 1 to 4 when said computer program product is implemented by a non-quantum computer.

FIG. 1

/1/ Performing product decomposition of U:
$$U = C \prod_{j=1}^{m} R_{P_j}(\theta_j)$$
with
$$R_{P_j}(\theta_j) = \cos(\theta_j/2)\, I_{2^n} - i\,\sin(\theta_j/2)\, P_j$$

/2/ Performing linear decomposition of $C^\dagger HC$:
$$C^\dagger HC : \sum_j a_{j'} P_{j'}$$

/3/ Expressing each $P_j$ in the form of:
$$i^{-v_z \cdot v_x} \sum_{k \in \{0;1\}^n} (-1)^{k \cdot v_z} |k\rangle\langle k \oplus v_x|$$

/5/ Expressing each $P_{j'}$ in the form of:
$$i^{-v_z \cdot v_x} \sum_{k \in \{0;1\}^n} (-1)^{k \cdot v_z} |k\rangle\langle k \oplus v_x|$$

/4/ Calculating: $|\psi_{final}\rangle = \prod_{j=1}^{m} R_{P_j}(\theta_j)|0\rangle$

/6/ Calculating: $\langle \psi_{final}|P_{j'}|\psi_{final}\rangle$

/7/ Calculating: $\langle 0|U^\dagger HU|0\rangle = \sum_{j'} a_{j'}\langle \psi_{final}|P_{j'}|\psi_{final}\rangle$

FIG. 2

11

---

**Algorithm 1:** Pauli rotation multiplication

 **Input:** State vector $|\psi\rangle$, Pauli operator $P$, Angle $\theta$
 **Output:** A new vector $|\psi'\rangle = R_P(\theta)|\psi\rangle$
1   $|\psi'\rangle \leftarrow$ zero vector
2   $v_z \leftarrow \text{ComputeMaskZ}(P)$
3   $v_x \leftarrow \text{ComputeMaskX}(P)$
4   $p \leftarrow \text{ComputeYPhase}(P)$
5   **for** $k \in \{0,1\}^n$ **do**
6    $\langle k|\psi'\rangle \leftarrow \cos(\theta/2)\langle k|\psi\rangle - i(-1)^{k \cdot v_z} p \sin(\theta/2)\langle k \oplus v_x|\psi\rangle$
7   **end**
8   **return** $|\psi'\rangle$

---

# FIG. 3

---

**Algorithm 2:** Pauli operator sampling

 **Input:** State vector $|\psi_{final}\rangle$, Pauli operator $P$
 **Output:** scalar equal to $\langle\psi_{final}|P|\psi_{final}\rangle$
1   $r \leftarrow 0$
2   $v_z \leftarrow \text{ComputeMaskZ}(P)$
3   $v_z \leftarrow \text{ComputeMaskX}(P)$
4   $p \leftarrow \text{ComputeYPhase}(P)$
5   **for** $k \in \{0,1\}^n$ **do**
6    $r \leftarrow r + (-1)^{k \cdot v_z}\langle\psi_{final}|k\rangle\langle k \oplus v_x|\psi_{final}\rangle$
7   **end**
8   **return** $p \times r$

---

# FIG. 4

FIG. 5a

FIG. 5b

Europäisches Patentamt
European Patent Office
Office européen des brevets

# EUROPEAN SEARCH REPORT

Application Number

**EP 22 30 5863**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON MARTIEL ET AL: "Architecture aware compilation of quantum circuits via lazy synthesis", ARXIV.ORG, CORNELL UNIVERSITY LIBRARY, 201 OLIN LIBRARY CORNELL UNIVERSITY ITHACA, NY 14853, 2 June 2022 (2022-06-02), XP091236893, * Section 4.3 and Section A * | 1-5 | INV. G06N10/20 G06N10/80 |
| A | ALBERT T SCHMITZ ET AL: "Graph Optimization Perspective for Low-Depth Trotter-Suzuki Decomposition", ARXIV.ORG, CORNELL UNIVERSITY LIBRARY, 201 OLIN LIBRARY CORNELL UNIVERSITY ITHACA, NY 14853, 7 February 2022 (2022-02-07), XP091144390, * abstract; Section 3 * | 1-5 | |
| A | PRADNYA KHALATE ET AL: "An LLVM-based C++ Compiler Toolchain for Variational Hybrid Quantum-Classical Algorithms and Quantum Accelerators", ARXIV.ORG, CORNELL UNIVERSITY LIBRARY, 201 OLIN LIBRARY CORNELL UNIVERSITY ITHACA, NY 14853, 22 February 2022 (2022-02-22), XP091163791, * abstract; Sections I-IV; figure 1 * | 1-5 | TECHNICAL FIELDS SEARCHED (IPC) G06N |

-/--

The present search report has been drawn up for all claims

| Place of search | Date of completion of the search | Examiner |
|---|---|---|
| The Hague | 11 November 2022 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 22 30 5863

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SWATHI S HEGDE ET AL: "Pauli Decomposition over Commuting Subsets: Applications in Gate Synthesis, State Preparation, and Quantum Simulations", ARXIV.ORG, CORNELL UNIVERSITY LIBRARY, 201 OLIN LIBRARY CORNELL UNIVERSITY ITHACA, NY 14853, 22 March 2016 (2016-03-22), XP080691310, * abstract; Sections I, II, III-C, and IV; figure 1 * | 1-5 | |

-----

**TECHNICAL FIELDS SEARCHED (IPC)**

The present search report has been drawn up for all claims

| Place of search | Date of completion of the search | Examiner |
|---|---|---|
| The Hague | 11 November 2022 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)